# EUROPEAN PATENT APPLICATION

(11) **EP 1 995 110 A2**
(43) Date of publication of application: **26.11.2008**
(21) Application number: 08156651.5
(22) Date of filing: 21.05.2008
(51) Int. Cl.: B60N 2/07

(54) **Seat position adjusting apparatus for vehicle**

(30) Priority: 25.05.2007 JP 2007139409; 25.05.2007 JP 2007139410
(71) Applicant: Aisin Seiki Kabushiki Kaisha, Kariya-shi, Aichi 448-8650 (JP)
(72) Inventor: Yamada, Yukifumi AISIN SEIKI KABUSHIKI KAISHA, Kariya-shi Aichi 448-8650 (JP); Ito, Sadao AISIN SEIKI KABUSHIKI KAISHA, Kariya-shi Aichi 448-8650 (JP)
(74) Representative: TBK-Patent

(57) **Abstract**

A seat system for a vehicle, includes a first pair of slide rails (7) and a second pair of slide rails (8) arranged on a vehicle compartment floor (3) so as to extend in a front-rear direction of the vehicle, a first seat (5a) and a second seat (5b) arranged alongside each other, a forward-rearward movement mechanism (10) provided under each of the first and second seats (5a, 5b) and supported at each of the first and second pairs of slide rails (7, 8) so that each of the first and second seats (5a, 5b) is movable along each of the first and second pairs of slide rails (7, 8), and a sway mechanism (20) provided between each of the first and second seats (5a, 5b) and the forward-rearward movement mechanism (10) and swayably supporting each of the first and second seats (5a, 5b) at least in a direction where each of the first and second seats (5a, 5b) is approaching another of the first and the second seats (5a, 5b).

## Description

### FIELD OF THE INVENTION

The present invention relates to a seat system for a vehicle.

### BACKGROUND

A conventional rear seat (seat) mounted on a vehicle such as a minivan (a multi-purpose vehicle) is configured to be variously arrangeable in order to improve vehicle interior comfortability and convenience. For example, a seat system disclosed in JP2001347858A enables seats in a third row to be stored and seats in a second row to be movable in a rear direction close to a position where the third row seats are originally positioned. The second row seats are structured so as to be movable in a front-rear direction of the vehicle along slide rails provided on a vehicle compartment floor.

However, in many cases, wheel housings for rear wheels (hereinafter referred to as rear wheel housings) need to be formed on rear portions of the compartment floor in a protruding manner, which results in narrowing an area for the third row seats in a vehicle width direction compared to an area for the second row seats. Therefore, the second row seats may not sufficiently move in the rearward direction when being moved in the rearward direction because second row seats contact the corresponding rear wheel housings.

In order to prevent the second row seats from contacting the corresponding rear wheel housings, the seat system disclosed in JP2001347858A includes the slide rails being arranged so that forward portions thereof face outward the vehicle and rearward portions thereof face inward of the vehicle compartment. In other words, the slide rails are provided so as to be oblique relative to the front-rear direction of the vehicle on a plane view. Hence, the second row seats are arranged so as to be spaced away from each other when being positioned at forward positions and so as to approach each other in accordance with the rearward movement. As the second row seats are less likely to contact the corresponding wheel housings for the rear wheels when the second row seats are moved in the front-rear direction, the second row seats become sufficiently movable in the rearward direction of the vehicle.

In order to prevent the seats from contacting the corresponding rear wheel housings, detailed designs such as increasing oblique angles of the slide rails relative to the front-rear direction of the vehicle, narrowing a clearance between the second row seats when being positioned at the forward positions, changing shapes of the second row seats and the like, may be required. However, in a case where the oblique angle is set to be large, a moving range within which the second row seats moves is narrowed because the second row seats are allowed to be rearwardly moved up to a position where the second row seats do not contact each other. On the other hand, in a case where the slide rails are arranged so that the clearance between the second row seats is narrowed when being positioned at the forward positions, a walk-through function in which the clearance is used as a passage to the third row seats may be deteriorated, and further, usability of the seat system may be degraded.

A need thus exists to provide a seat system for a having a simple structure, which realizes various seat arrangements having high usability.

### SUMMARY OF THE INVENTION

According to an aspect of the present invention, a seat system for a vehicle, includes a first pair of slide rails and a second pair of slide rails adapted to be arranged on a compartment floor of the vehicle so as to extend in a front-rear direction of the vehicle, a first seat and a second seat arranged alongside each other in a vehicle width direction, a forward-rearward movement mechanism provided under each of the first and second seats and supported at each of the first and second pairs of slide rails so that each of the first and second seats is movable in the front-rear direction of the vehicle along each of the first and second pairs of slide rails, and a sway mechanism provided between each of the first and second seats and the forward-rearward movement mechanism and swayably supporting each of the first and second seats about a preset rotation center point at least in a direction where each of the first and second seats is approaching another of the first and the second seats.

According to a further aspect of the present invention, each of the first pair of slide rails and the second pair of slide rails is arranged to be orthogonal to the vehicle width direction.

According to a further aspect of the present invention, each of the first pair of slide rails and the second pair of slide rails is arranged so as to obliquely intersect with the vehicle width direction.

Accordingly, the first and second rear seats 5a and 5b are swayable along the arcs centered on the rotation center points respectively. Hence, the first and second seats are less likely to contact the corresponding rear wheel housings formed on the compartment floor so as to protrude towards the vehicle compartment by the first and second seats swaying in the direction where first and second seats approach each other, i.e. by swaying the first and second seats inward of the vehicle compartment. As a result, the amount of movement of each of the first and second seats in the front-rear direction of the vehicle is sufficiently ensured. Further, the first and second pair of the slide rails do not necessarily need to be arranged on the compartment floor so as to obliquely extend relative to the front-rear direction of the vehicle. As a result, the clearance between the first and second seats is sufficiently ensured when being positioned at the forward positions, and the first and second seats are less likely to contact each other when being positioned at the rearward positions. Moreover, when each of the first and second seats is swayed in the direction where the first and second seats face each other, the occupants seated on the first and second seats respectively may easily communicate with each other. Consequently, the seat system for the vehicle having the simple structure realizes the various seat arrangements having the high usability.

According to a further aspect of the present invention, the rotation center point of each of the first and second seats is set at a forward position and a rearward position in the front-rear direction of the vehicle.

Accordingly, when each of the rotation center points of each of the first and second seats is set ahead thereof in the front-rear direction of the vehicle, the personal space for the occupants is sufficiently ensured when the first and second seats are positioned at the rearward positions, because each of the first and second seats faces slightly outward the vehicle when being positioned at the rearward position. As a result, the comfortability for the occupants seated on the first and second seats respectively may be enhanced. On the other hand, when each of the rotation center points of each of the first and second seats is set behind thereof in the front-rear direction of the vehicle, the seat system for the vehicle may encourage and enhance the communication between the occupants seated on the first and second seats respectively, because each of the first and second seats faces slightly inward of the vehicle compartment. As a result, the usability of the seat system for the vehicle may be further enhanced.

According to a further aspect of the present invention, the sway mechanism includes a plurality of first sway rails fixed at the forward-rearward movement mechanism and forming a part of concentric arcs centered on the rotation center point, a plurality of second sway rails fixed at a bottom portion of each of the first and second seats and swayably supporting each of the first and second seats along the plurality of first sway rails, and a plurality of connecting portions supported between the plurality of the first sway rails and the plurality of the second sway rails.

Accordingly, each of the first and second seats is stably swayable because each of the first and second seats is supported by the plurality of first sway rails 21, the plurality of second sway rails 23.

According to a further aspect of the present invention, a seat system for a vehicle, includes a first slide rail structure and a second slide rail structure adapted to be arranged on a compartment floor of the vehicle so that front ends of the first and second slide rail structures in a front-rear direction of the vehicle outwardly spread in the vehicle width direction and rear ends thereof converge on a vehicle center line in the front-rear direction of the vehicle, a first seat and a second seat arranged alongside each other in a vehicle width direction, a forward-rearward movement mechanism provided below each of the first and second seats and supported at each of the first and second slide rail structures so that each of the first and second seats is movable along each of the first and second slide rail structures, and a rotation retaining mechanism provided between each of the first and second rear seats and the forward-rearward movement mechanism, the rotation retaining mechanism rotatably supporting each of the first and second seats and retaining each of the first and second seats at a position where each of the first and second seats faces the same direction as a extending direction of each of the first and second rail structure.

Accordingly, the first and second pairs of slide rails are arranged on the compartment floor so as to be spaced away from each other towards the front of the vehicle, and so as to approach each other towards the rear of the vehicle. Hence, the first and second seats are spaced away from each other when being positioned at the forward positions, and the first and second seats approach each other when being positioned at the rearward positions. Therefore, the first and second seats are less likely to contact the corresponding rear wheel housings protruding towards the vehicle compartment when the first and second seats are rearwardly moved. Furthermore, each of the first and second seats is rotatably supported by means of the rotation retaining mechanism, and each of the first and second seats is retained at the state where each of the first and second seats the same direction as extending direction of the corresponding slide. That is, each of the first and second rear seats 5a and 5b is retained so as to face the same direction as the moving direction thereof. Therefore, an outer edge of each of the first and second seats moves along the sliding direction thereof, so that the outer edge thereof is less likely to contact the corresponding rear wheel housing when each of the first and second seats is backwardly moved. Consequently, the clearance between the first and second seats is sufficiently ensured when being positioned at the forward positions, and the amount of movement of each of the first and second seats in the front-rear direction of the vehicle is sufficiently secured. Hence, the seat system for the vehicle having the simple structure achieves the various seat arrangements having the high usability.

According to a further aspect of the present invention, the seat rotation retaining mechanism retains each of the first and second seats at a position where each of the first and second seats faces inward of a vehicle compartment.

Accordingly, the occupants seated on the first and second seats respectively easily face each other by retaining the first and second seats so as to be oblique towards the vehicle compartment. Hence, the seat system for the vehicle may encourage and enhance the communication between the occupants seated on the first and second seats respectively.

According to a further aspect of the present invention, the seat rotation retaining mechanism retains each of the first and second seats so as to face at least towards a vehicle entrance when each of the first and second seats is moved to a position corresponding to the vehicle entrance.

Accordingly, each of the first and second seats is rotated and retained at the position where each of the first and second seats faces towards the vehicle entrance. Hence, the passenger may easily get on/off each of the first and second seats.

According to a further aspect of the present invention, the seat system for the vehicle further including a movement restricting mechanism restricting rearward movement of each of the first and second seats at a position anterior to a position where each of the first and second seats contacts each of rear wheel housings protruding towards a vehicle compartment when each of the first and second seat is moved backward in a state where each of the first and second seat contacts each of the rear wheel housing, wherein the movement restricting mechanism derestricts the rearward movement of each of the first and second seats in conjunction with an avoidance movement when each of the first and second seats is moved to a state where each of the first and second seats does not contact each of the rear wheel housings.

Accordingly, when each of the first and second seats is further rearwardly moved in the state where each of the first and second rear seats contacts the corresponding rear wheel housing, the rearward movement of each of the first and second seats is restricted by means of the movement restricting mechanism before each of the first and second seats contacts the corresponding rear wheel housing. Therefore, the damage caused on each of the first and second seats by contacting the corresponding rear wheel housing is surely prevented. Further, when each of the first and second seats is moved so as to avoid contact with the corresponding rear wheel housing, the rearward movement of each of the first and second seats restricted by the movement restricting mechanism is derestricted in response to the avoidance movement of each of the first and second seats. Hence, the amount of the movement of each of the first and second seats is sufficiently ensured, and further, the various seat arrangements having the high usability is achievable.

According to a further aspect of the present invention, the movement restricting mechanism includes a restricting protrusion provided on each of the first and second slide rails, an interlocking mechanism provided at each of the first and second seats for restricting a rearward movement of each of the first and second seats at a position anterior to a position where each of the first and second seats contacts each of the rear wheel housings by the interlocking mechanism engaging with the restricting protrusion and disengaging from the restricting protrusion in conjunction with the avoidance movement, the interlocking mechanism includes a first link rotated in a horizontal direction in conjunction with the avoidance movement of each of the first and second seats, a second link rotated in a vertical direction in conjunction with the horizontal rotation of the first link, wherein the forward and rearward movement of the first and second seats is restricted/derestricted by an end portion of the second link engaging/disengaging with/from the restricting protrusion.

Accordingly, the first link and the second link are structured so as to interlock with the avoidance movement of each of the first and second seats. When each of the first and second seats is in the state where each of the first and second seats contacts the corresponding rear wheel housing, the second link engage with the restricting protrusion. On the other hand, when each of the first and second seats is in the state where each of the first and second rear seats does not contact the corresponding rear wheel housing, the second link does not engage with the corresponding restricting protrusion. Hence, by employing the mechanical movement restricting mechanism, the rearward movement of each of the first and second seats is surely restricted/allowed.

According to a further aspect of the present invention, a seat system for a vehicle, includes a first pair of slide rails and a second pair of slide rails adapted to be arranged on a compartment floor of the vehicle so as to extend in a front-rear direction of the vehicle, a first seat and a second seat arranged alongside each other in a vehicle width direction, a forward-rearward movement mechanism provided under each of the first and second seats and supported at each of the first and second pairs of slide rails so that each of the first and second seats is movable in the front-rear direction along each of the first and second pairs of slide rails, a contact avoiding mechanism provided between each of the first and second seats and the forward-rearward movement mechanism and movably supporting each of the first and second seats in a direction where each of the first and second seats approach each other so that each of the first and second seats does not contact each of rear wheel housings protruding towards a vehicle compartment when each of first and second seats is rearwardly moved, and a movement restricting mechanism for restricting a rearward movement of each of the first and second seat at a position anterior to a position where each of the first and second seats contacts each of the rear wheel housings when each of the first and second seat is moved backward in a state where each of the first and second seat contacts each of the rear wheel housings, wherein the movement restricting mechanism derestricts the rearward movement of each of the first and second seats in conjunction with an avoidance movement when each of the first and second seats is moved to a state where each of the first and second seats does not contact each of the rear wheel housings.

Accordingly, when each of the first and second seats is further rearwardly moved in the state where each of the first and second seats contacts each of the rear wheel housings, the rearward movement of each of the first and second seats is restricted by means of the movement restricting mechanism before each of the first and second seats contacts each of the rear wheel housings. Therefore, the damage caused on each of the first and second seats by contacting each of the rear wheel housing is surely prevented. Further, when each of the first and second seats is moved so as to avoid the contact with each of rear wheel housings, the rearward movement of each of the first and second seats restricted by the movement restricting mechanism is derestricted in response to the avoidance movement of each of the first and second seats. Hence, the amount of the movement of each of the first and second seats is sufficiently ensured, and further, the various seat arrangements having the high usability is achievable. Moreover, each of the first and second seats is surely prevented from contacting each of the rear wheel housings.

According to a further aspect of the present invention, the movement restricting mechanism includes a restricting protrusion provided on each of the first and second slide rails, an interlocking mechanism provided at each of the first and second seats for restricting a rearward movement of each of the first and second seats at a position anterior to a position where each of the first and second seats contacts each of the rear wheel housings by the interlocking mechanism engaging with the restricting protrusion and disengaging from the restricting protrusion in conjunction with the avoidance movement, the interlocking mechanism includes a first link rotated in a horizontal direction in conjunction with the avoidance movement of each of the first and second seats, a second link rotated in a vertical direction in conjunction with the horizontal rotation of the first link, wherein the forward and rearward movement of the first and second seats is restricted/derestricted by an end portion of the second link engaging/disengaging with/from the restricting protrusion.

Accordingly, the first link and the second link are structured so as to interlock with the avoidance movement of each of the first and second seats. When each of the first and second seats is in the state where each of the first and second seats contacts each of the rear wheel housings, the second link engages with the restricting protrusion. On the other hand, when each of the first and second seats is in the state where each of the first and second seats does not contact each of the rear wheel housings, the second links does not engage with the restricting protrusion. Hence, by employing the mechanical movement restricting mechanism, the rearward movement of each of the first and second seats is surely restricted/allowed.

### BRIEF DESCRIPTION OF THE DRAWINGS

The foregoing and additional features and characteristics of the present invention will become more apparent from the following detailed description considered with the reference to the accompanying drawings, wherein:

Fig. 1 is a plan view schematically illustrating a compartment of a vehicle to which a seat system for a vehicle associated with a first embodiment is mounted;

Fig. 2 is a side view schematically illustrating a part of the seat system for the vehicle associated with the first embodiment;

Fig. 3A is a plan view schematically illustrating operation of a sway mechanism and movement restricting mechanism;

Fig. 3B is a plan view schematically illustrating operation of a sway mechanism and movement restricting mechanism;

Fig. 4A is a plan view schematically illustrating an operational example of the seat system for the vehicle associated with the first embodiment;

Fig. 4B is a plan view schematically illustrating an operational example of the seat system for the vehicle associated with the first embodiment;

Fig. 5 is a plan view schematically illustrating an operational example of the seat system associated with the first embodiment;

Fig. 6 is a plan view schematically illustrating a vehicle to which a modified seat system of the first embodiment is mounted;

Fig. 7A is a plan view schematically illustrating an operational example of the modified seat system of the first embodiment;

Fig. 7B is a plan view schematically illustrating an operational example of the modified seat system of the first embodiment;

Fig. 8 is a plan view schematically illustrating the compartment of the vehicle to which a seat system for a vehicle associated with a second embodiment is mounted;

Fig. 9 is an exploded perspective view illustrating a structure of the seat system for the vehicle associated with the second embodiment;

Fig. 10 is an exploded perspective view illustrating a seat rotation maintaining mechanism of the seat system for the vehicle associated with the second embodiment;

Fig. 11A is a plan view schematically illustrating a movement restricting mechanism;

Fig. 11B is a view seen from a direction of an arrow F in Fig. 11A;

Fig. 12A is a plan view schematically illustrating an operational example of the seat system for the vehicle associated with the second embodiment;

Fig. 12B is a plan view schematically illustrating an operational example of the seat system for the vehicle associated with the second embodiment;

Fig. 13A is a plan view schematically illustrating an operational example of the seat system for the vehicle associated with the second embodiment; and

Fig. 13B is a plan view schematically illustrating an operational example of the seat system for the vehicle associated with the second embodiment.

### DETAILED DESCRIPTION

### [First Embodiment]

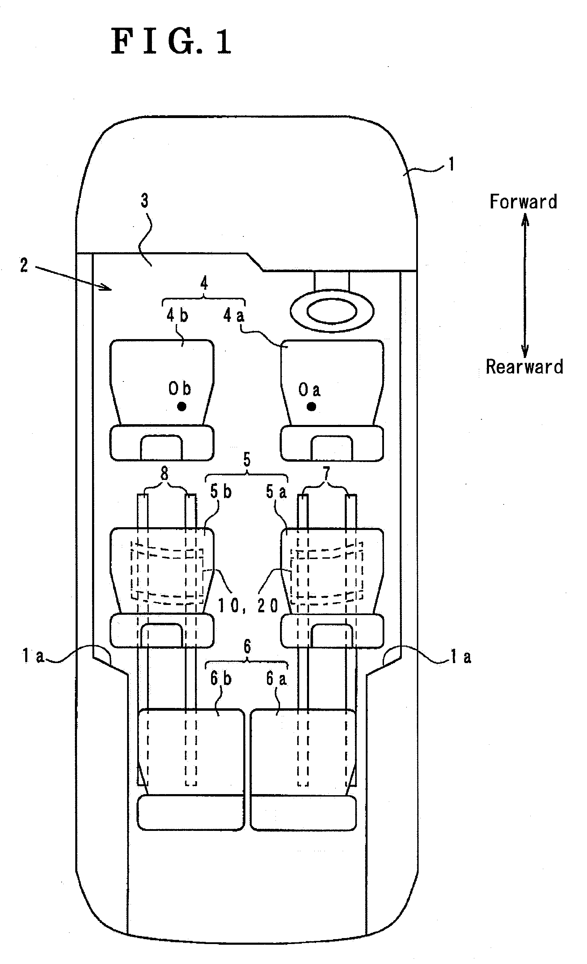

A first embodiment of the present invention will be described below in accordance with Figs. 1 to 5 of the attached drawings.

As illustrated in Fig. 1, first row seats 4 including a driver seat 4a and passenger seat 4b are arranged at the front-most positions on a compartment floor 3 in a compartment 2 of a vehicle 1 in a vehicle width direction so as to be positioned at forward-most positions. Second row seats 5 including a first rear seat 5a (first seat) and a second rear seat 5b (second seat) are arranged alongside each other each other behind the first row seats 4 in a front-rear direction of the vehicle. Further, third row seats 6 including a third rear seat 6a and a fourth rear seat 6b are arranged alongside each other each other behind the second row seats 5 in the front-rear direction of the vehicle.

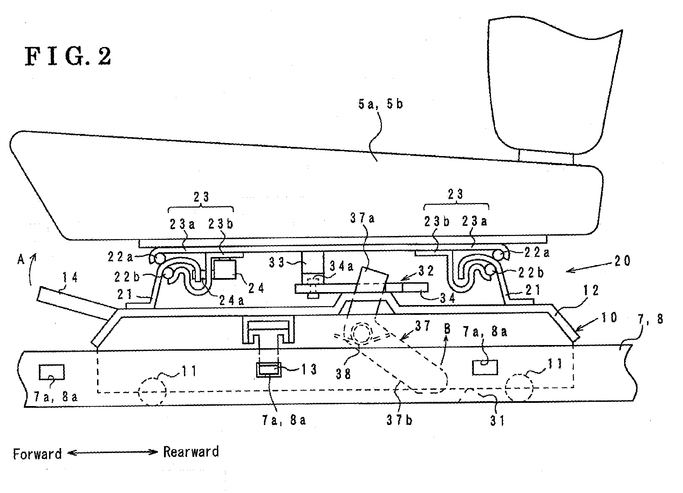

A pair of first slide rails 7, which support the first rear seat 5a so as to be movable in the front-rear direction of the vehicle, is provided on the compartment floor 3 so as to extend parallel to the front-rear direction of the vehicle. Likewise, a pair of second slide rails 8, which support the second rear seat 5b so as to be movable in the front-rear- direction of the vehicle, is provided on the compartment floor 3 so as to extend parallel to the front-rear direction of the vehicle. The first slide rails 7 and the second slide rails 8 are arranged so as to form a sufficient clearance between the first rear seat 5a and the second rear seat 5b. As illustrated in Fig. 2, each of the first rear seat 5a and the second rear seat 5b is attached at each of the first and second pair of slide rails 7 and 8 via upper rails 10 serving as a forward-rearward movement mechanism and sway mechanisms 20 serving as a contact avoiding mechanism. The first slide rails 7 and the first rear seat 5a provided thereon are structured the same as the second slide rails 8 and the second rear seat 5b provided thereon. Therefore, for the explanatory purpose, the structure and functions of the seat system will be described below with respect to the second slide rails 8 and the second rear seat 5b as example, unless otherwise mentioned. Further, reference numerals in parentheses indicate corresponding portions of the first slide rails 7 and the first rear seat 5a provided thereon.

More specifically, the upper rail 10 includes a base 12 attached at the second slide rails 8 via rolling elements 11. The base 12 is movable in the front-rear direction of the vehicle along the second slide rails 8 by the rolling elements 11 rolling relative to the second slide rails 8.

Plural engaging holes 8a (7a) are provided through the second slide rails 8 (7) at predetermined intervals. The base 12 is provided with engaging portions 13 each of which engages with any one of the plural engaging holes 8a (7a). Therefore, movement of the upper rails 10 in the front-rear direction of the vehicle is restricted by each of the engaging portions 13 engaging with any one of the plural engaging holes 8a (7a). As a result, the second rear seat 5b (5a) is fixedly positioned.

A slide operating lever 14, which is tiltable in a direction of an arrow A in Fig. 2, is formed at a front end of the base 12 in the front-rear direction of the vehicle. When the slide operating lever 14 is operated, each of the engaging portions 13 is moved in a disengaging direction from the engaging hole 8a (7a) by means of a link mechanism (not shown). As a result, the engaging portions 13 are disengaged from the engaging holes 8a (7a) respectively, and the upper rails 10 become movable in the front-rear direction of the vehicle.

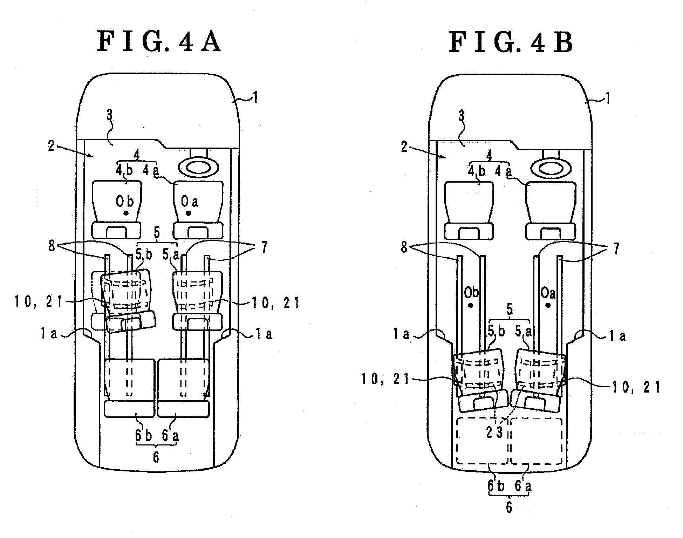

A pair of lower sway rails 21 (first sway rails), which form a part of the sway mechanism 20, is fixed at the front end and a rear end respectively in the front-rear direction of the vehicle on an upper surface of the base 12. As illustrated in Fig. 2, one end of each of the lower sway rails 21 is fixed on the base 12, and the other end of each of the lower sway rails 21 forms an upwardly extending free end. The free end of each of the lower sway rails 21 forms a curved line when viewed from a cross-section. Further, the free end of each of the lower sway rails 21 forms a substantially inverted U-shape. As illustrated in Figs. 4A and 4B, the lower sway rails 21 of the second rear seat 5b (5a) extend in the vehicle width direction so as to correspond to respective arcs of concentric circles whose center point Ob (Oa) is set at a position ahead of the second rear seat 5b (5a) in the front-rear direction of the vehicle. In this embodiment, the center point Ob (Oa) is set within an area where the first row seats 4 are arranged.

As illustrated in Fig. 2, upper sway rails 23 (second away rails), which include a first upper sway rail 23a and a pair of second upper sway rails 23b, are attached so as to hold the lower sway rails 21 respectively via corresponding first rollers 22a and second rollers 22b. Each of the first and second rollers 22a and 33b forms a part of connecting portion. The first upper sway rail 23a is formed with a substantially flat plate material and secured at a lower surface of the second rear seat 5b (5a), and an end portions of the first upper sway rail 23a in the front-rear direction of the vehicle are downwardly curved so as to form arcs. Each of the first rollers 22a is held between each of the curved portions of the first sway rail 23a and each of the lower sway rails 21. One end of each of the second upper sway rails 23b is fixed at the first upper sway rail 23a, and the other end of the each of the second upper sway rails 23b is curved so as to form substantially a S-shape. Each of the second roller 22b is held between the other end of each of the second upper sway rails 23b and each of the lower sway rails 21.

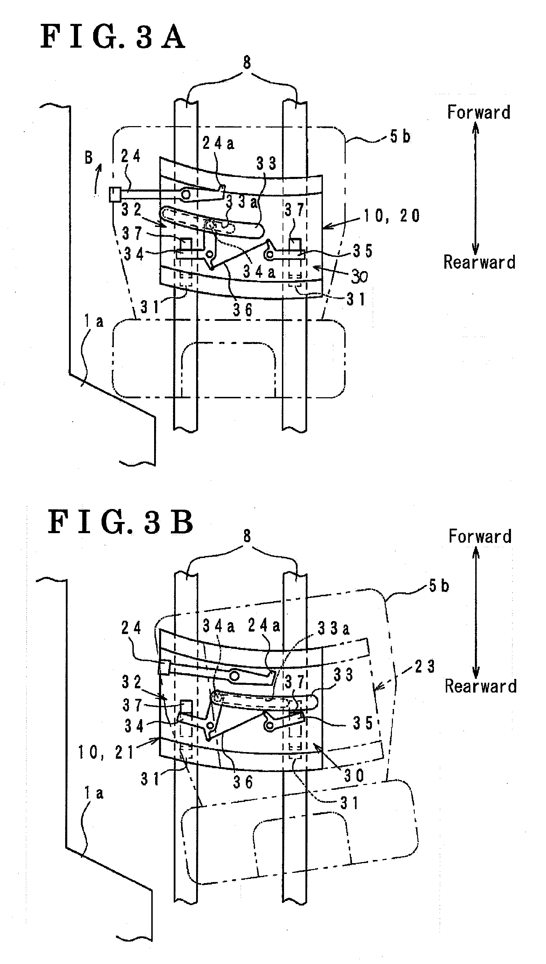

Therefore, the upper sway rails 23 become swayable relative to the lower sway rails 21 in the vehicle width direction by the first and second rollers 22a and 22b rolling. More specifically, the lower sway rails 21 and the upper sway rails 23 become swayable along the arcs of the concentric circle centered on the center point Ob (Oa). Hence, as illustrated in Figs. 3 and 4, the first rear seat 5a and the second rear seat 5b become swayable in the vehicle width direction.

Further, as illustrated in Figs. 2 and 3, a sway regulating lever 24 extending in the vehicle width direction is provided at one of the second upper sway rails 23b arranged ahead of the other second upper sway rail 23b in the front-rear direction of the vehicle. As illustrated in Figs. 3A and 3B, substantially center portion of the sway regulating lever 24 is supported at the one of the second upper sway rail 23b so that the sway regulating lever 24 is rotatable in a horizontal direction around the supported portion. An engaging protrusion 24a, which is engaged with any one of engaging holes (not shown) provided at the one of the second upper sway rail 23b and the corresponding lower sway rail 21, is formed at one end portion of the sway regulating lever 24 facing inward of the second rear seat 5b (5a). The one of the second upper sway rails 23b and the corresponding lower sway rail 21 include plural engaging holes so that the engaging protrusion 24a is engageable therewith at a position where at least the second rear seat 5b (5a) facing forward in the front-rear direction of the vehicle (see Fig. 3A) and at a position
where the second rear seat 5b (5a) sway towards inward of the vehicle (see Fig. 3B). Additionally, the sway regulating lever 24 is always biased in a direction where the engaging protrusion 24a is engaged with corresponding engaging holes by means of a biasing means (not shown) provided at, for example, the substantially center portion of the sway regulating lever 24 supported by the one of the second upper sway rail 23b. Therefore, each of the first and second rear seats 5a and 5b becomes swayable when the engaging protrusion 24a is disengaged from the corresponding engaging holes by means of the corresponding sway regulating lever 24 that is operated manually.

As illustrated in Figs. 2 and 3, a movement restricting mechanism 30 for restricting an amount of rearward movement of the second rear seat 5b (5a) are provided at a rear portion thereof. More specifically, the movement restricting mechanism 30 includes restricting protrusions 31 provided at each of the pair of the second slide rails 8 (7) and an interlocking mechanism 32 provided at the second rear seat 5b (5a).

As illustrated in Fig. 2, each of the restricting protrusions 31 is arranged at a lower surface of each of the pair of the second slide rails 8 (7) and forms an angular protrusion having a steep slope at a surface facing forward and a gentle slope at a surface facing rearward. The above-structured restricting protrusion 31 is provided at each of the pair of the first slide rails 7 and each of the pair of the second slide rails 8.

The interlocking mechanism 32 provided at each of the first and second rear seats 5a and 5b includes a connecting plate 33 provided at a lower surface of the first upper sway rail 23a, a pair of first links 34, 35 rotatably supported on an upper surface of the base 12, and a pair of second links 37 rotatably supported on inner wall surfaces of the base.

As illustrated in Fig. 3, the connecting plate 33 forms a curved plate-shape extending in the vehicle width direction and includes an elongated groove 33a on a lower surface thereof. One of the first links 34 and 35 is formed with a plate member forming a substantially L-shape, and the bent portion of one of the first links 34 and 35 is rotatably supported on the upper surface of the base 12. In this embodiment, the first link 34 is formed with the plate material forming the substantially L-shape. Hence, the first link 34 is structured so as to be rotatable in the horizontal direction of the vehicle. The first link 34 is connected to the connecting plate 33 by a connecting pin 34a provided at one end of the first link 34 being freely fitted into the elongated groove 33a. Further, the other end of the first link 34 extends outwardly in the vehicle width direction. The first link 35 is formed with a plate material forming a substantially bar-shape. One end of the first link 35 is rotatably supported at the base 12. Therefore, the first link 35 is also structured so as to be rotatable in the horizontal direction of the vehicle. The other end of the first link 35 extends towards inward of the vehicle. Further, one end of an interlocking cable 36 is connected in the vicinity of the portion of the first link 34 supported on the base 12, and the other one end of the interlocking cable 36 is connected in the vicinity of the portion of the first link 35 supported on the base 12. As a result, when the first link 34 is rotated, the first link 35 is rotated in a direction opposite from the rotational direction of the first link 34.

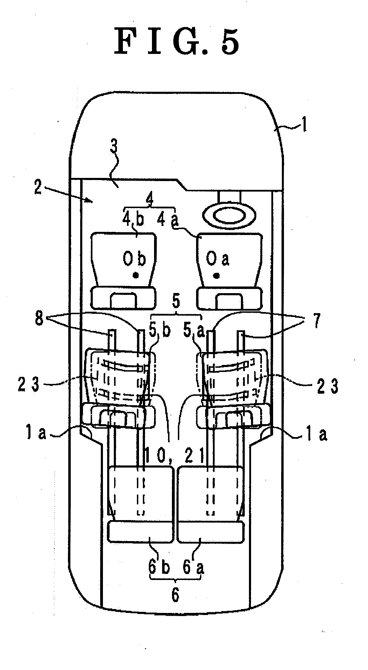

As illustrated in Fig. 3, the second links 37 are rotatably supported on the inner wall surfaces of the base 12 at positions immediately above the second slide rails 8 (7) respectively. As illustrated in Fig. 2, each of the second links 37 is formed with a plate material forming a substantially L-shape, and a bent portion thereof is supported at the base 12. An upper end portion 37a of each of the second links 37 is upwardly protruding from the base 12 so as to contact respective first links 34 and 35. A lower end portion 37b of each of the second links 37 is positioned immediately above the respective second slide rails 8 (7). A biasing means 38 such as a spring and the like is provided at the supported portion of each of the second links 37 so that each of the second links 37 is always biased in a clockwise direction in Fig. 2. Further, as illustrated in Fig. 3A, each of the second links 37 is provided so as to contact each of the restricting protrusions 31 at a forward position anterior to a position where the second rear seat 5b (5a) contacts a wheel housing for rear wheel 1a (hereinafter referred to as a rear wheel housing) when the second rear seat 5b (5a) is moved backward in a state where the second rear seat 5b (5a) contacts the rear wheel housing 1a formed so as to protrude towards the vehicle compartment 2. The state where the second rear seat 5b (5a) contacts the rear wheel housing 1a indicates, for example, a state where the second rear seat 5b (5a) faces forward in the front-rear direction of the vehicle or a state where the second rear seat 5b (5a) faces inward of the vehicle compartment 2 as illustrated in Fig. 5.

Thus, as illustrated in Fig. 3A, when the second rear seat 5b (5a) is further moved backward in the state where the second rear seat 5b (5a) contacts the rear wheel housing 1a, the lower portions 37b of the second links 37 contact corresponding restricting protrusions 31 before the second rear seat 5b (5a) contacts the rear wheel housing 1a. Hence, the amount of movement of the second rear seat 5b (5a) in the front-rear direction of the vehicle is restricted.

Additionally, as illustrated in Figs. 3B and 4A, when the second rear seat 5b (5a) is swayed inwardly towards the vehicle compartment 2, i.e. when the second rear seat 5b (5a) is moved so as to avoid contact with the rear wheel housing 1a, the connecting plate 33 is also moved in conjunction with movement of the second rear seat 5b (5a). Therefore, in conjunction with movement of the second rear seat 5b (5a) for avoiding the contact with the rear wheel housing 1a, the connecting pin 34a of the first link 34 is pulled by the connecting plate 33, and then, the first link 34 is rotated in a clockwise direction in Fig. 3A. In conjunction with clockwise rotation of the first link 34, the first link 35 is rotated in a counterclockwise direction in Fig. 3A via the interlocking cable 36. As a result, the second links 37 are pushed by the first links 34 and 35 respectively and are rotated in a direction B illustrated in Fig. 2. Consequently, the lower end portion 37b of each of the second links 37 is upwardly moved, which results in disengaging each of the second links 37 and each of the restricting protrusions 31. That is to say, when the second rear seat 5b (5a) is moved to a position where the contact with the rear wheel housing 1a is avoidable, the rearward movement of the second rear seat 5b (5a) in the front-rear direction of the vehicle is derestricted in conjunction with the avoidance movement of the second rear seat 5b (5a). Hence, as illustrated in Fig. 4B, a further rearward movement of the second rear seat 5b (5a) towards the rear of the vehicle compartment 2 is realized. Additionally, the third row seats 6 are accommodable under the compartment floor 3, as illustrated in Fig. 4B. When the third row seats 6 are accommodated under the compartment floor 3, the second row seats 5 become movable up to the rear-most positions.

In a process of moving the second row seats 5 to the rear-most position, the first and second rear seats 5a and 5b face outward, i.e. in a direction where each of the first and second rear seats 5a and 5b face opposite from each other. Hence, although the clearance between the first and second rear seats 5a and 5b is narrowed, legs of occupants seated on the rear seats 5a and 5b respectively are less likely to contact each other. Further, because the second row seats 5 are moved to the rear-most position, a personal space that effectively utilizes a space between the first row seats 4 and the second row seats 5 is created.

On the other hand, as illustrated in Fig. 5, in a process of moving the second row seats 5 to the forward positions in the front-rear direction of the vehicle, the first and second rear seats 5a and 5b are rotatable in a direction where the first and second rear seats 5a and 5b face each other by being outwardly swayed. Hence, communication between the occupants seated on the first and second rear seats 5a and 5b respectively may be encouraged. Moreover, when the second row seats 5 are moved forward, the first and second rear seats 5a and 5b are spaced away from each other, which results in preventing the legs of the occupants seated on the first and second rear seats 5a and 5b respectively from contacting each other, and the passage to the third row seats 6 is also widely formed.

According to the seat system for the vehicle associated with the first embodiment, the following effects and benefits are achievable.

As the first and second rear seats 5a and 5b, which form the second row seats 5, are swayable along the arcs centered on the rotational center point Oa and Ob respectively, the first and second rear seats 5a and 5b are less likely to contact the corresponding rear wheel housings 1a by swaying the first and second rear seats 5a and 5b in a direction where the first and second rear seats 5a and 5b approach each other, i.e. inwardly towards the vehicle compartment 2, when the first and second rear seats 5a and 5b are moved backward to the rear positions of the vehicle compartment 2. Hence, the moving amount of each of the first and second rear seats 5a and 5b in the front-rear direction of the vehicle are widely secured. Further, the first and second slide rails 7 and 8 are not necessarily provided obliquely relative to the front-rear direction of the vehicle in the seat system of the first embodiment. The first and second rear seats 5a and 5b are prevented from contacting each other when being backwardly moved while maintaining the clearance therebetween formed when being position at the forward positions. In addition, when the first and second rear seats 5a and 5b are swayed in the direction where the first and second rear seats 5a and 5b face each other, the communication between the occupants seated thereon respectively may be encouraged. Hence, various seat arrangements having high usability is realized with the seat system for the vehicle having a simple structure.

Each of rotational center points Oa and Ob of respective first and second rear seats 5a and 5b are set further ahead of the forward position of each of the first and second rear seats 5a and 5b. Therefore, while the first and second rear seats 5a and 5b are positioned at the rearward positions, each of the first and second rear seats 5a and 5b slightly faces inward of the vehicle compartment 2. Thus, the personal space is widely formed for the occupants seated on the first and second rear seats 5a and 5b respectively while the first and second rear seats 5a and 5b are positioned at the rearward positions. As a result, comfortability for the occupants may be enhanced.

Each of the first and second rear seats 5a and 5b is supported by each of the pairs of sway rails. Each of the pairs of sway rails is formed with the pair of the lower sway rails 21 and the pair of the upper sway rails 23. Hence, each of the first and second rear seats 5a and 5b are stably swayed in the vehicle width direction.

When each of the first and second rear seats 5a and 5b is moved backwardly in the state where each of the first and second rear seats 5a and 5b contacts the rear wheel housings 1a if each of the first and second rear seats 5a and 5b is further moved backward along the respective first and second rails 7 and 8 which are arranged straight in the front-rear direction of the vehicle, the rearward movement of each of the first and second rear seats 5a and 5b is restricted by means of respective movement restricting mechanisms 30 before each of the rear seats 5a and 5b contacts the corresponding rear wheel housings 1a. Thus, damage caused by each of the first and second rear seats 5a and 5b contacting the corresponding rear wheel housings 1a is surely prevented from occurring. Further, when each of the first and second rear seats 5a and 5b are moved to a position where the contact with the rear wheel housings 1a is prevented (preventive movement), the rearward movement in the front-rear direction of the vehicle by the respective movement restricting mechanisms 30 is derestricted in conjunction with the preventive movement of each of the rear seats 5a and 5b. Hence, the amount of movement of each of the first and second rear seats 5a and 5b is widely ensured. Further, various seat arrangements having the high usability is achieved. Moreover, each of the first and second rear seats 5a and 5b is surely prevented from contacting each of the rear wheel housings 1a.

The first links 34 and 35 and the second links 37 are interlocked in conjunction with the preventive movement of each of the first and second rear seats 5a and 5b. In the state where the each of the rear seats 5a and 5b is about to contact each of the rear wheel housings 1a, the second links 37 are engaged with the corresponding restricting protrusions 31. On the other hand, when each of the rear seats 5a and 5b is in the state where each of the rear seats 5a and 5b does not contact each of the rear wheel housings 1a, the second links 37 are disengaged from the corresponding restricting protrusions 31. Hence, by employing the mechanical movement restricting mechanism 30, the rearward movement of each of the first and second rear seats 5a and 5b is surely restricted/allowed.

The seat system of the first embodiment may be changed and modified as follows.

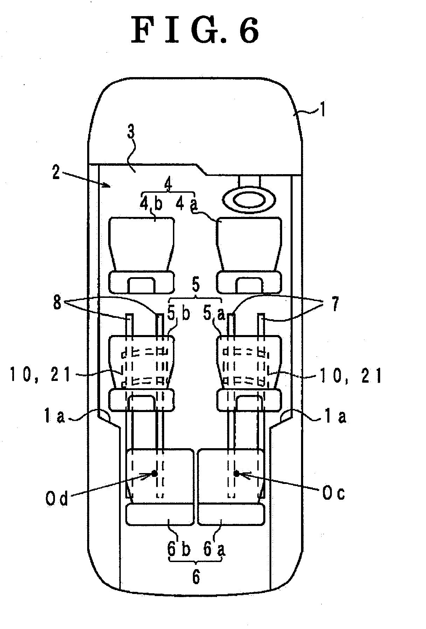

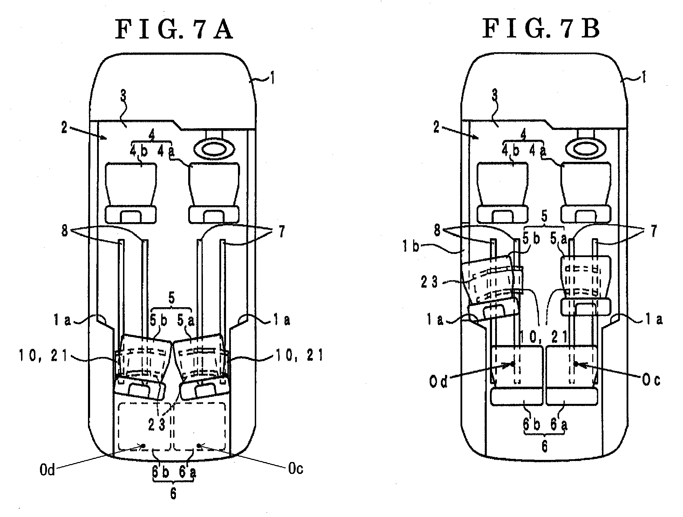

Each of the first and second rear seats 5a and 5b forming the second row seats, does not need to be set so as to sway along the rotational arcs centered on each of the center points Oa and Ob, each of which is set in front in the front-rear direction of the vehicle. For example, as illustrated in Fig. 6, each of the first and second rear seats 5a and 5b may be set so as to sway along a rotational arc centered on each of center points Od and Oc, each of which is set behind each of the rear seats 5a and 5b. For example, each of the center points Od and Oc may be set at a position where each of the third row seats 6 is arranged. When the sway center points Od and Oc are set behind the rear seats 5a and 5b respectively, the rear seats 5a and 5b slightly face each other when being moved at the rearward positions, as illustrated in Fig. 7A. Thus, communication between the occupants seated on the first and second rear seats 5a and 5b respectively may be encouraged and enhanced at the rearwardly moved positions. Further, as illustrated in Fig. 7B, the passenger may easily get on/off the second rear seat 5b by swaying the second rear seat 5b towards an entrance 1b when the second rear seat 5b is positioned at the forward position. As a result, the usability of the seat system may further be enhanced.

The rotational center of each of the first and second rear seats 5a and 5b does not need to be set individually as illustrated in, for example, Fig. 5, but for example, only one rotational center point may be set on a middle point of a line connecting the center points Oa and Ob.

### [Second embodiment]

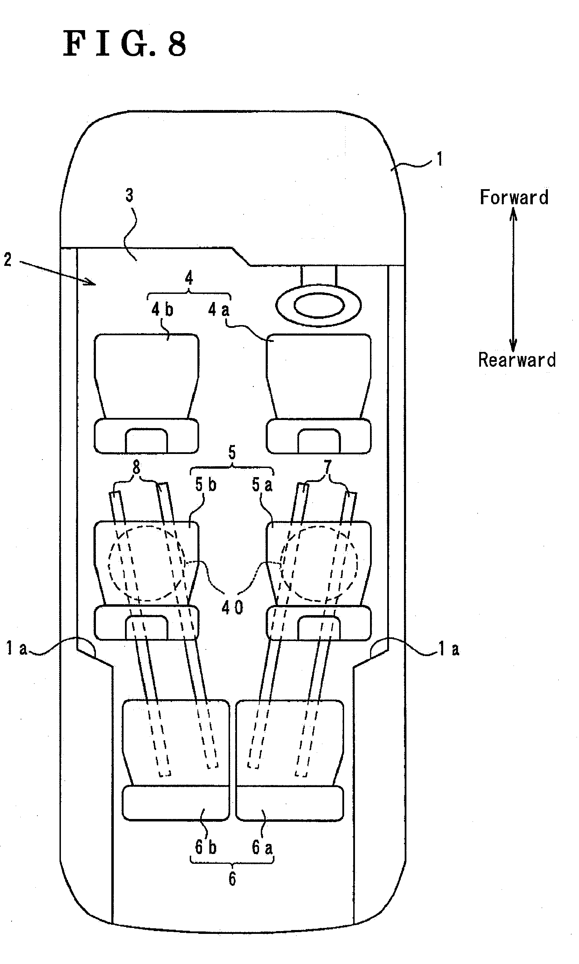

The seat system associated with a second embodiment will be described below in accordance with Fig. 8 to Fig. 13 of the attached drawings.

As illustrated in Fig. 8, the first row seats 4 including the driver seat 4a and the passenger seat 4b are arranged in the vehicle width direction at the front-most positions on the compartment floor 3 in the compartment 2 of the vehicle 1. The second row seats 5 including the first rear seat 5a and the second rear seat 5b are arranged alongside each other behind the front row seats 4. Further, the third row seats 6 including the third rear seat 6a and the fourth rear seat 6b are arranged alongside each other behind the second row seats 5 in the front-rear direction of the vehicle.

A pair of first slide rails 7 (first slide rail structure), which serves as a slide rail mechanism for supporting the first rear seat 5a so as to be movable in the front-rear direction of the vehicle, is provided on the compartment floor 3. Likewise, a pair of second slide rails 8 (second slide rail structure), which serves as the slide rail mechanisms for supporting the second rear seat 5b so as to be movable in the front-rear-direction of the vehicle, is provided on the compartment floor 3. Each pairs of the first and second slide rails 7 and 8 extend obliquely relative to the front-rear direction of the vehicle on the compartment floor 3 so that front portion thereof are widely apart from each other and end portion thereof approach each other. In other words, the first and second pair of the slide rails 7 and 8 are arranged on the compartment floor 3 so that the front ends thereof extend so as to outwardly expand in the vehicle width direction and the rear ends thereof extend so as to converge on the center line of the vehicle extending in the front-rear direction of the vehicle. As a result, when each of the first and second rear seats 5a and 5b is positioned at the forward positions illustrated in Fig. 8, sufficient space exists therebetween. The first slide rails 7 and the first rear seat 5a provided thereon are structured the same as the second slide rails 8 and the second rear seat 5b provided thereon. Therefore, the structure and functions of the seat system will be described below with respect to the second slide rails 8 and the second rear seat 5b as example, unless otherwise mentioned. Further, reference numerals in parentheses indicate corresponding portions of the first slide rails 7 and the first rear seat 5a provided thereon.

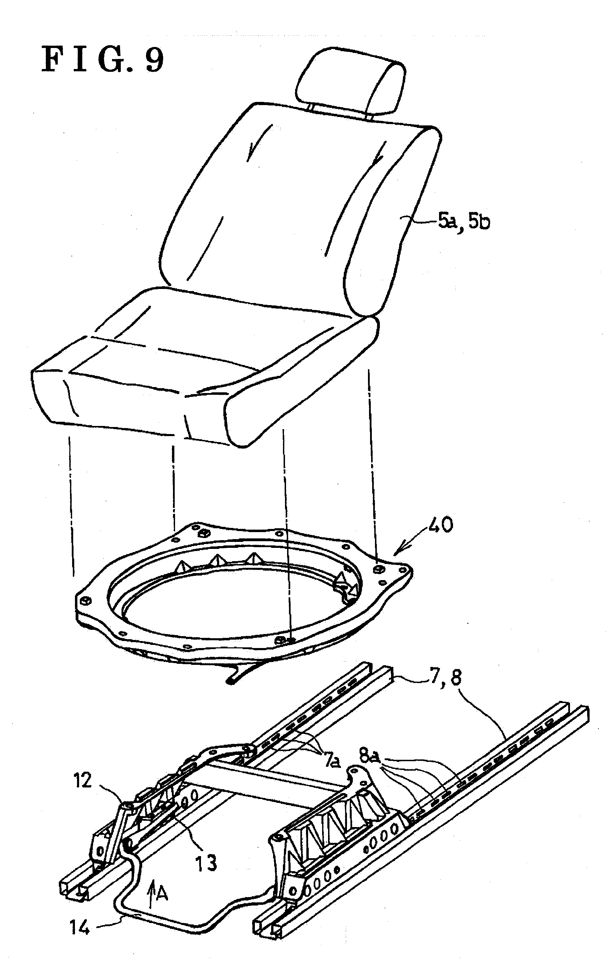

As illustrated in Fig. 9, the second rear seat 5b (5a) is provided at the second slide rails 8 (7) via the upper rails 10 functioning as the forward-rearward movement mechanism and a seat rotation retaining mechanism 40 functioning as the contact avoiding mechanism. More specifically, each of the upper rails 10 includes the base 12 provided at each of the second slide rails 8 (7) via the rolling elements 11 (not shown) so that the bases 12 are movable in the front-rear direction of the vehicle along each of the second slide rails 8 (7) by the rolling elements 11 being rolled relative to each of the slide rails 8 (7).

The plural engaging holes 8a (7a) are provided through each of the second slide rails 8 (7) at predetermined intervals. The base 12 is provided with the engaging portion 13 that engages with any one of the plural engaging holes 8a (7a). Therefore, the movement of the upper rails 10 in the front-rear direction of the vehicle is restricted by each of the engaging portions 13 being engaged with any one of the plural engaging holes 8a (7a). As a result, the second rear seat 5b (5a) is fixedly positioned.

The slide operating lever 14, which is tiltable in a direction of an arrow A in Fig. 9, is formed at the front ends of the bases 12 in the front-rear direction of the vehicle so as to connect the front ends of the bases 12. When the slide operating lever 14 is operated, the engaging operations 13 are moved in the direction where the engaging portions 13 are disengaged from the corresponding engaging holes 8a (7a) by means of the link mechanism (not shown). As a result, the engaging portions 13 are disengaged from the corresponding engaging holes 8a (7a), and the upper rails 10 become movable in the front-rear direction of the vehicle.

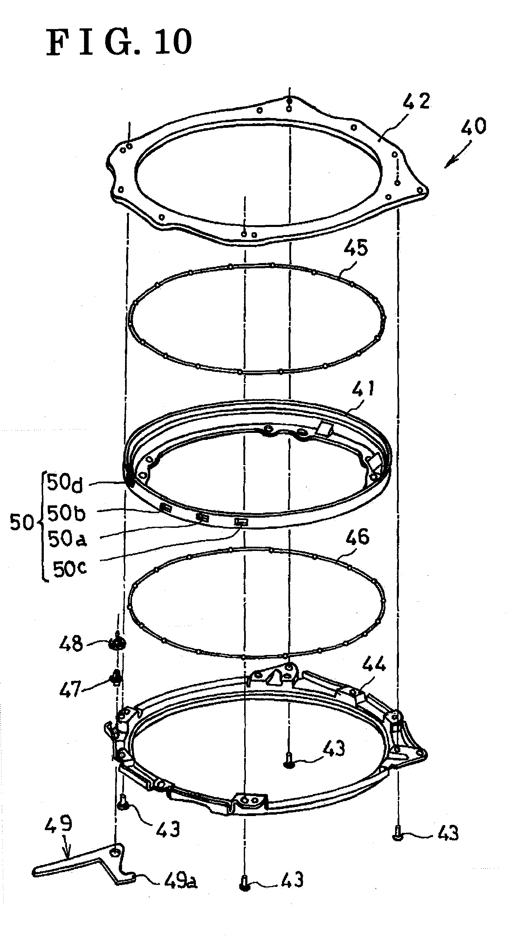

The seat rotation retaining mechanism 40 is provided between the second rear seat 5b (5a) and the bases 12. As illustrated in Fig. 10, the seat rotation retaining mechanism 40 includes a lower base 41 in a ring shape being fixed at the bases 12, a first upper base 43 in a ring shape being fixed on the lower surface of the second rear seat 5b (5a) and a second upper base 44 in a ring shape being fixed at the first upper base 42 by calking pins 43.

The first upper base 42 is arranged at the upper most, the second upper base 44 is arranged at the lower most, and the lower base 41 is held by the first and second upper bases 42 and 44. Further, a first rolling member 45 in a ring shape is provided between the lower base 41 and the first upper base 42. A second rolling member 46 in a ring shape is provided between the lower base 41 and the second upper base 44. Hence, the first and second upper bases 42 and 44 are rotatable relative to the lower base 41.

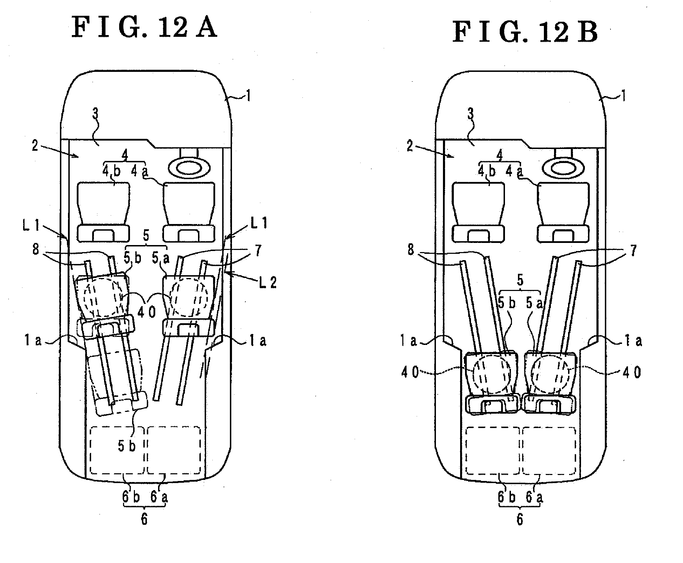

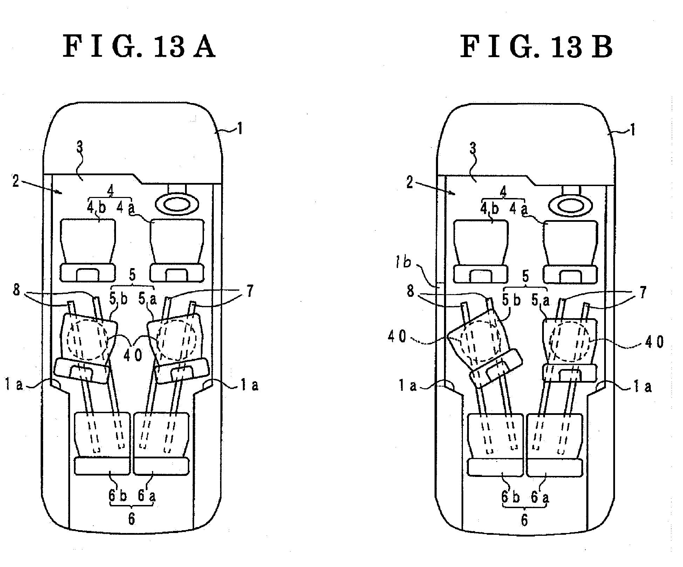

A operating lever 49 is hold on the second upper base 44 by means of a pin 47 and a spring 48 so as to be rotatable relative to the second upper base 44. A locking nail 49a is formed on the operating lever 49. Further, the operating lever 49 is attached to the second upper base 44 so that the locking nail 49a is biased towards the lower base 41 a by means of the spring 48. More specifically, plural locking holes 50 (a first locking hole 50a, a second locking hole 50b, a third locking hole 50c and a fourth locking hole 50d) are provided through an outer circumferential surface of the lower base 41 at predetermined intervals. The operating lever 49 is biased by the spring 48 in a direction where the locking nail 49a is engaged with any one of the locking holes 50a, 50b, 50c and 50d. When the locking lever 49 is at a position where the locking nail 49a is positioned so as to correspond to any one of the locking holes 50a, 50b, 50c and 50d, the locking nail 49a is engaged with any one of the locking holes 50a, 50b, 50c and 50d. In this embodiment, the first locking hole 50a is provided so as to correspond to the locking nail 49a when the second rear seat 5b (5a) faces forward in the front-rear direction of the vehicle as illustrated in Fig. 1. Further, the second locking hole 50b is provided so as to correspond to the locking nail 49a when the second rear seat 5b (5a) faces the same direction as the extending direction of the second slide rails 8 (7), as illustrated in Fig. 12A. The third locking hole 50c is provided so as to correspond to the locking nail 49a when the second rear seat 5b (5a) slightly faces inward of the vehicle compartment 2, i.e., where each of the first and second rear seats 5a and 5b slightly faces each other. The fourth locking hole 50d is provided so as to correspond to the locking nail 49a when the second rear seat 5b (5a) faces further outwardly than the extending direction of the second slide rails 8 (7), as illustrated in Fig. 13B.

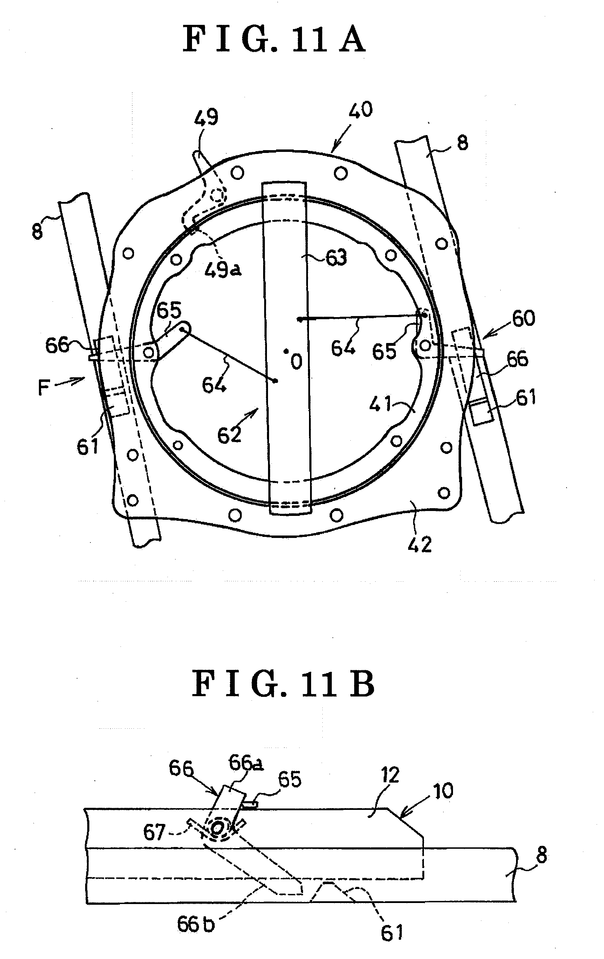

A movement restricting mechanism 60 for restricting the rearward movement of each of the first and second rear seats 5a and 5b is provided below each of the first and second rear seats 5a and 5b. More specifically, the movement restricting mechanism 60 includes restricting protrusions 61 provided at each of the second slide rails 8 (7) and an interlocking mechanism 62 provided at the second rear seats 5b (5a). The same structured symmetrical movement restricting mechanisms 60 are provided below the first and second rear seats 5a and 5b respectively. Hence, structure and functions of the movement restricting mechanisms 60 will be described below with the movement restricting mechanism 60 provided below the second rear seat 5b as an example. Further, the upper rails 10 are omitted in Fig. 11A.

As is also illustrated in Fig. 11B, each of the restricting protrusions 61 forms an angular protrusion so as to form a steep slope at a surface facing forward and a gentle slope at a surface facing rearward. The above-structured restricting protrusion 61 is provided at each of the pair of the rail members that form the second slide rails 8.

The interlocking mechanism 62 includes a plate-shaped connecting plate 63 provided on an upper surface of the first upper base 42, interlocking cables 64 whose one ends are connected to the interlocking plate 63 at points symmetrical with respect to a rotational center point O of the first upper base 42 in a longitudinal direction of the interlocking plate 63, a pair of first links 65 each of which is rotatably supported at a lower surface of the lower base 41 at a position in vicinity of each of the second slide rails 8 and to which each of the other end of the interlocking cables 64 is connected, and a pair of second links 66 rotatably supported at an inner wall surface of respective bases 12.

Each of the first links 65 is formed with a plate material forming substantially L-shape and is rotatably supported at the lower surface of the lower base 41 at the bent portion of each of the first links 65 so that one end thereof faces inward of the seat rotation retaining mechanism 40 and the other end thereof faces outward the seat rotation retaining mechanism 40. Hence, each of the first links 65 is formed to be rotatable in the horizontal direction of the vehicle. Further, each of the interlocking cables 64 is connected at an inner end portion of each of the first links 65 facing inward of the seat rotation retaining mechanism 40. More specifically, the other end of the interlocking cable 64 connected to one of the first links 65 arranged at an outward position (the firs link 65 arranged at the left side in Fig. 11) is connected to the interlocking plate 63 at a position behind the rotation center point O of the first upper base 42 in the front-rear direction of the vehicle. Further, the other end of the interlocking cable 64 connected to the other one of the first links 65 arranged at an inward position (the first link 65 arranged at the right side in Fig. 11) is connected to the interlocking plate 63 in front of the rotation center point O in the front-rear direction of the vehicle. Hence, when the first upper base 42 is rotated in a counterclockwise direction in Fig. 11, the interlocking cables 64 are pulled by the connecting plate 63. As a result, each of the first links 65 is rotated so that the outer end of the seat rotation retaining mechanism 40 is moved forward in the front-rear direction of the vehicle.

As is also illustrated in Fig. 11B, each of the second links 66 is rotatably supported at the inner wall surface of each of the bases 12 so as to be positioned above each of the second slide rails 8. Each of the second links 66 is formed with a plate material forming substantially L-shape, and a bent portion thereof is supported at each of the base 12. Further, an upper end 66a of each of the second links 66 upwardly protrudes from each of the base 12 and contacts each of the first links 65. The lower end 66b of each of the second links 66 is positioned above the lower surface of each of the second slide rails 8. Moreover, the supported portion of each of the second links 66 is provided with a biasing member 67 such as a coil spring and the like so that each of the second links 66 is always biased in a clockwise direction in Fig. 11B. Furthermore, the second links 66 are arranged so as to contact with the respective restricting protrusions 61 at the forward position anterior to a position where the second rear seat 5b contacts the rear wheel housing 1a, when the second rear seat 5b is backwardly moved in the state where the second rear seat 5b possibly contacts the rear wheel housing 1a formed so as to protrude towards the vehicle compartment 2. Additionally, the state where at least one of the first and second rear seats 5a and 5b contacts the corresponding rear wheel housing 1a indicates a state where, for example, the first rear seat 5a faces forward as illustrated in Fig. 12A or a state where, for example, the first and second rear seats 5a and 5b face inward of the vehicle compartment 2 so as to slightly face each other as illustrated in Fig. 13A. In other words, the state where at least one of the first and second rear seats 5a and 5b contacts the corresponding rear wheel housing 1a indicates a state where, for example, the second rear seat 5b follows a moving line L2, which leads the second rear seat 5b to contact the rear wheel housing 1a, instead of following a moving line L1, which does not lead the second rear seat 5b to contact the rear wheel housing 1a.

When the second rear seat 5b is further rearwardly moved in the front-rear direction of the vehicle in the state where the second rear seat 5b possibly contacts the rear wheel housing 1a, the lower end 66b of each of the second links 37 contacts each of the restricting protrusions 31 before the second rear seat 5b contacts the rear wheel housing 1a. As a result, the amount of movement of the second rear seat 5b in the front-rear direction of the vehicle is restricted.

Additionally, when the second rear seat 5b is rotated toward the outward the vehicle 1 so as to be parallel to the direction the slide rails 8 extend as illustrated in Fig. 12A, the locking nail 49a of the operating lever 49 illustrated in Fig. 10 engages with the second locking hole 50b provided through the lower base 41 so that the second rear seat 5b is fixed at a position where the second rear seat 5b does not contact the rear wheel housing 1a even when being further backwardly moved. In other words, the second rear seat 5b is fixed at a rotational angle so that the second rear seat 5b follows the moving line L1 when being further backwardly moved. In conjunction with the rotation of the second rear seat 5b, the connecting plate 63 is rotated in the counterclockwise direction in Fig. 11A, which further pulls the interlocking cables 64. As a result, each of the first links 65 is rotated so that the outer end of the seat rotation retaining mechanism 40 is moved forward in the front-rear direction of the vehicle. Hence, by operation of the outer end of each of the first link 65, each of the second links 66 is rotated in the counterclockwise direction Fig. 11B, and then the upper end 66b of each of the second links 66 is upwardly moved. As a result, the second links 66 are disengaged from the respective restricting protrusions 61. In other words, when the second rear seat 5b is rotated to a position where the second rear seat 5b does not contact the rear wheel housing 1a, the rearward movement of the second rear seat 5b is derestricted in conjunction with the avoidance movement of the second rear seat 5b. Hence, as illustrated in Fig. 12B, the rear seat 5b (5a) becomes moveable further towards the rear of the vehicle. Additionally, as illustrated in Fig. 12B, the third row seats 6a are accommodable under the compartment floor 3. When the third row seats are accommodated under the compartment floor 3, the second row seats become movable up to the rear-most position within the vehicle compartment 2.

When the second row seats 5 are moved at the rear-most positions, the first and second rear seats 5a and 5b face opposite from each other, i.e. so as to face slightly outward the vehicle as illustrated with dashed lines in Fig. 12B. Hence, although distance between the first and second rear seats 5a and 5b is shortened, legs of the occupants seated on first and second rear seats 5a and 5b respectively are less likely to contact each other. Further, the personal space, which effectively utilizes a space between the first row seats 4 and the second row seats 5, is created. Further, as illustrated with full lines in Fig. 12B, each of the first and the rear seats 5a and 5b are rotatable so as to face forward.

On the other hand, as illustrated in Fig. 13A, when the first and second rear seats 5a and 5b are rotated inward of the vehicle compartment 2 in a condition where the second row seats 5 are in the forward positions in the front-rear direction of the vehicle, the locking nail 49a of the operating lever 49 illustrated in Fig. 10 engages with the third locking hole 50c provided through the lower base 41. Therefore, the first and second rear seats 5a and 5b are configured to be positioned at positions where first and second rear seats 5a and 5b slightly face each other. Hence, the communication between the occupants seated on the first and second rear seats 5a and 5b respectively may be encouraged and enhanced. Additionally, when the first and second rear seats 5a and 5b are moved at the forward positions, the first and second rear seats 5a and 5b are spaced away from each other. As a result, legs of the occupants seated on the first and second rear seats 5a and 5b are prevented from contacting each other, and further, a passage to access the third row seats 6 is widely secured.

On the other hand, as illustrated in Fig. 13B, when the second rear seat 5b positioned at the forward position is rotated towards the entrance 1b provided at a side of the vehicle, the locking nail 49a of the operating lever 49 engages with the fourth locking hole 50d provided through the lower base 41. Hence, the passenger may easily get on/off the second rear seat 5b, and the usability of the seat system is further enhanced.

Additionally, the first rear seat 5a is operated in the same manner as the second rear seat 5b. Hence, the first rear seat 5a has the same functions and effects.

According to the second embodiment, the following effects and benefits may be achieved.

The slide rails 7 and 8, each of which forms the slide rail structure, are arranged on the compartment floor 3 so that the first and second slide rails 7 and 8 are spaced away towards the front of the vehicle, and so that the first and second slide rails 7 and 8 approach each other towards the rear of the vehicle. Therefore, the first and second rear seats 5a and 5b are spaced away when being positioned at the forward positions, and the first and second rear seats 5a and 5b approach each other when being positioned at the rearward positions. Hence, the first and second rear seats 5a and 5b are less likely to contact the corresponding rear wheel housings 1a formed on the compartment floor 3 so as to protrude towards the vehicle compartment 2, when the rear seats 5a and 5b are backwardly moved. Moreover, each of the first and second rear seats 5a and 5b is rotatably supported by means of the rotation retaining mechanism 40, and each of the first and second rear seats 5a and 5b is retained at a state where each of the rear seats 5a and 5b face the same direction as the extending direction of each of the first and second slide rails 7 and 8. In other words, each of the first and second rear seats 5a and 5b is retained at the state where each of the rear seats 5a and 5b faces the same direction as the moving direction thereof. Therefore, an outer edge of each of the first and second rear seats 5a and 5b follows along the moving direction, so that the outer edge of each of the first and second rear seats 5a and 5b is less likely to contact the rear wheel housing 1a. Hence, the clearance between the first and second rear seats 5a and 5b is sufficiently secured when the second row seats 5 are positioned at the forward positions, and the amount of movement thereof in the front-rear direction of the vehicle is sufficiently ensured. As a result, the seat system having the simple structure realizes various seat arrangements having the high usability.

The first and second rear seats 5a and 5b are retainable at the positions where the rear seats 5a and 5b face inward of the vehicle compartment 2, which allows the occupants seated thereon respectively to face each other more easily. As a result, the communication between the occupants seated on the first and second rear seats 5a and 5b respectively may be encouraged and enhanced.

Each of the first and second rear seats 5a and 5b is rotated and retained at the position where each of the rear seats 5a and 5b faces towards the entrance 1b. Hence, passenger may easily get on/off each of the first and second rear seat 5a and 5b.

When each of the first and second rear seats 5a and 5b is further backwardly moved in the state where each of the rear seats 5a and 5b contacts the corresponding rear wheel housings 1a, the rearward movement of each of the rear seats 5a and 5b is restricted by means of the movement restricting mechanism 60 before each of the rear seats 5a and 5b contacts the corresponding rear wheel housings 1a. Hence, damage caused by each of the first and second rear seats 5a and 5b contacting the corresponding rear wheel housings 1a is surely prevented and avoidable. Further, when each of the first and second rear seats 5a and 5b is rotated so as to be in the sate where each of the rear seats 5a and 5b does not contact the corresponding rear wheel housings 1a, the rearward movement restricted by the movement restricting mechanism 60 is derestricted in response to the rotational operation of each of the rear seats 5a and 5b. Hence, the amount of movement of each of the first and second rear seats 5a and 5b is sufficiently ensured, and further, each of the rear seats 5a and 5b is surely prevented from each of the corresponding rear wheel housings 1a.

The first links 65 and the second links 66 are operated in conjunction with the avoidance movement of each of the first and second rear seats 5a and 5b. When each of the rear seats 5a and 5b is in the state where each of the rear seats 5a and 5b contacts the corresponding rear wheel housing 1a, the second links 66 engage the restricting protrusions 31 respectively. On the other hand, when each of the rear seats 5a and 5b is in the sate where each of the rear seats 5a and 5b does not contact each of the rear wheel housings 1a, the second links 66 are disengaged from the restricting protrusions 31 respectively. Hence, by employing the mechanical movement restricting mechanism 60 to each of the first and second rear seats 5a and 5b, the rearward movement of each of the rear seats 5a and 5b is surely restricted and allowed.

The seat system for the vehicle associated with the embodiments may be changed and modified as follows.

The seat system for the vehicle associated with the first embodiment may have the first and second slide rails 7 and 8, which are arranged so as to obliquely extend relative to the front-rear direction of the vehicle as the slide rails 7 and 8 of the seat system for the vehicle associated with the second embodiment.

The locking holes 50 of the seat system for the vehicle associated with the second embodiment do not need to be provided through the lower base 41 at the positions of the first locking hole 50a, the second locking hole 50b, the third locking hole 50c and the fourth locking hole 50d as illustrated in Fig. 10, but the locking holes 50 may be provided through the lower base 41 at other positions, for example, positions where the locking nail 49a of each of the first and second rear seats 5a and 5b engages with a locking hole at the position where the rear seats 5a and 5b face each other.

The movement restricting mechanism 30 of the seat system for the vehicle associated with the first embodiment and the movement restricting mechanism 60 of the seat system for the vehicle associated with the second embodiment are not necessarily provided.

The first and second rear seats 5a and 5b forming the second row seats 5 do not need to be structured so as to avoid the contact with the corresponding rear wheel housings 1b by means of the sway mechanism 20 described in the first embodiment or the seat rotation retaining mechanism 40 described in the second embodiment. For example, each of the first and second rear seats 5a and 5b may be structured so as to avoid the contact with each of the rear wheel housings 1b by means of a lateral movement mechanism that is disclosed in JP2003118443A and that is moveable in a lateral direction of the vehicle. When the lateral movement mechanism is employed to the seat system for the vehicle, for example, the movement restriction mechanism 30 is employed, and the interlocking mechanism 32 is moved in response to a lateral movement of each of the rear seats 5a and 5b so that the movement restricting mechanism 30 is disengaged from the restricting protrusions 31.

Accordingly, the first and second rear seats 5a and 5b are swayable along the arcs centered on the rotation center points Oa and Ob respectively. Hence, the first and second rear seats 5a and 5b are less likely to contact the corresponding rear wheel housings 1a formed on the compartment floor 3 so as to protrude towards the vehicle compartment 2 by the rear seats 5a and 5b swaying in the direction where rear seats 5a and 5b approach each other, i.e. by swaying the rear seats 5a and 5b inward of the vehicle compartment 2. As a result, the amount of movement of each of the first and second rear seats 5a and 5b in the front-rear direction of the vehicle is sufficiently ensured. Further, the first and second pair of the slide rails 7 and 8 do not necessarily need to be arranged on the compartment floor 3 so as to obliquely extend relative to the front-rear direction of the vehicle. As a result, the clearance between the first and second rear seats 5a and 5b is sufficiently ensured when being positioned at the forward positions, and rear seats 5a and 5b are less likely to contact each other when being positioned at the rearward positions. Moreover, when each of the first and second rear seats 5a and 5b is swayed in the direction where rear seats 5a and 5b face each other, the occupants seated on the rear seats 5a and 5b respectively may easily communicate with each other. Consequently, the seat system for the vehicle having the simple structure realizes the various seat arrangements having the high usability.

According to the first embodiment, the rotation center points Oa and Ob of the first and second rear seats 5a and 5b are set at the forward positions respectively. Alternatively, the rotation center points Oc and Od of the first and second rear seats 5a and 5b are set at the rearward positions respectively in the front-rear direction of the vehicle.

Accordingly, when each of the rotation center points Oa and Ob of each of the first and second rear seats 5a and 5b is set ahead thereof in front-rear direction of the vehicle, the personal space for the occupants is sufficiently ensured when the rear seats 5a and 5b are positioned at the rearward positions, because each of the rear seats 5a and 5b faces slightly outward the vehicle when being positioned at the rearward position. As a result, the comfortability for the occupants seated on the first and second rear seats 5a and 5b respectively may be enhanced. On the other hand, when each of the rotation center points Oc and Od of each of the first and second rear seats 5a and 5b is set behind thereof in the front-rear direction of the vehicle, the seat system for the vehicle may encourage and enhance the communication between the occupants seated on the rear seats 5a and 5b respectively, because each of the first and second rear seats 5a and 5b faces slightly inward of the vehicle compartment 2. As a result, the usability of the seat system for the vehicle may be further enhanced.

According to the first embodiment, the sway mechanism 20 includes the pair of lower sway rails 21 fixed at the forward-rearward movement mechanism 10 and forming a part of concentric arcs centered on each of the rotation center points Oa and Ob (Oc, Od), the pair of upper sway rails 23 fixed at a bottom portion of each of the first and second seats 5a and 5b and swayably supporting each of the first and second rear seats 5a and 5b along the pair of lower sway rails 21, and the plural connecting portions 22a and 22b supported between the pair of the lower sway rails 21 and the pair of upper sway rails 23.

Accordingly, each of the first and second rear seats 5a and 5b is stably swayable because each of the rear seats 5a and 5b is supported by the pair of the lower sway rails 21, the first upper sway rail 23a and the pair of the second upper sway rails 23b.

Accordingly, the first and second pairs of slide rails 7 and 8 are arranged on the compartment floor 3 so as to be spaced away from each other towards the front of the vehicle, and so as to approach each other towards the rear of the vehicle. Hence, the first and second rear seats 5a and 5b are spaced away from each other when being positioned at the forward positions, and the rear seats 5a and 5b approach each other when being positioned at the rearward positions. Therefore, the first and second rear seats 5a and 5b are less likely to contact the corresponding rear wheel housings 1a protruding towards the vehicle compartment 2 when the rear seats 5a and 5b are rearwardly moved. Furthermore, each of the first and second rear seats 5a and 5b is rotatably supported by means of the rotation retaining mechanism 40, and each of the rear seats 5a and 5b is retained at the state where each of the rear seats 5a and 5b faces the same direction as the extending direction of the corresponding slide rails. That is, each of the first and second rear seats 5a and 5b is retained so as to face the same direction as the moving direction thereof. Therefore, the outer edge of each of the first and second rear seats 5a and 5b moves along the sliding direction thereof, so that the outer edge thereof is less likely to contact the corresponding rear wheel housing 1a when each of the rear seats 5a and 5b is backwardly moved. Consequently, the clearance between the first and second rear seats 5a and 5b is sufficiently ensured when being positioned at the forward positions, and the amount of movement of each of the rear seats 5a and 5b in the front-rear direction of the vehicle is sufficiently secured. Hence, the seat system for the vehicle having the simple structure achieves the various seat arrangements having the high usability.

According to the second embodiment, the seat rotation retaining mechanism 40 retains each of the first and second rear seats 5a and 5b at the position where each of the first and second rear seats 5a and 5b faces inward of a vehicle compartment 2.

Accordingly, the occupants seated on the first and second rear seats 5a and 5b respectively easily face each other by retaining the rear seats 5a and 5b so as to be oblique towards the vehicle compartment 2. Hence, the seat system for the vehicle may encourage and enhance the communication between the occupants seated on the first and second rear seats 5a and 5b respectively.

According to the second embodiment, the seat rotation retaining mechanism 40 retains each of the first and second rear seats 5a and 5b so as to face at least towards a vehicle entrance when each of the first and second rear seats 5a and 5b is moved to a position corresponding to the vehicle entrance.

Accordingly, each of the first and second rear seats 5a and 5b is rotated and retained at the position where each of the rear seats 5a and 5b faces towards the vehicle entrance. Hence, the passenger may easily get on/off each of the first and second rear seats 5a and 5b.

According to the first and second embodiments, the seat system for the vehicle includes the movement restricting mechanism 30 (60) restricting rearward movement of each of the first and second rear seats 5a and 5b at the position anterior to the position where each of the first and second rear seats 5a and 5b contacts each of rear wheel housings 1a protruding towards a vehicle compartment 2 when each of the first and second rear seat 5a and 5b is moved backward in a state where each of the first and second rear seat 5a and 5b contacts each of the rear wheel housings 1a, wherein the movement restricting mechanism 30 (60) derestricts the rearward movement of each of the first and second rear seats 5a and 5b in conjunction with an avoidance movement when each of the first and second rear seats 5a and 5b is moved to a state where each of the first and second rear seats 5a and 5b does not contact each of the rear wheel housings 1a.

Accordingly, when each of the first and second rear seats 5a and 5b is further rearwardly moved in the state where each of the rear seats 5a and 5b contacts the corresponding rear wheel housing 1a, the rearward movement of each of the rear seats 5a and 5b is restricted by means of the movement restricting mechanism 30 (60) before each of the rear seats 5a and 5b contacts the corresponding rear wheel housing 1a. Therefore, the damage caused on each of the first and second rear seats 5a and 5b by contacting the corresponding rear wheel housing 1a is surely prevented. Further, when each of the first and second rear seats 5a and 5b is moved so as to avoid contact with the corresponding rear wheel housing 1a, the rearward movement of each of the rear seats 5a and 5b restricted by the movement restricting mechanism 30 (60) is derestricted in response to the avoidance movement of each of the first and second rear seats 5a and 5b. Hence, the amount of the movement of each of the first and second rear seats 5a and 5b is sufficiently ensured, and further, the various seat arrangements having the high usability is achievable.

According to the first and second embodiments, the movement restricting mechanism 30 (60) includes the restricting protrusions 31 (61) provided on each of the first and second slide rails 7 and 8, the interlocking mechanism 32 (62) provided at each of the first and second rear seats 5a and 5b for restricting the rearward movement of each of the first and second rear seats 5a and 5b at the position anterior to the position where each of the first and second rear seats 5a and 5b contacts each of the rear wheel housings 1a by the interlocking mechanism engaging with the restricting protrusions 31 (61) and disengaging from the restricting protrusions 31 (61) in conjunction with the avoidance movement, the interlocking mechanism 32 (62) includes the first links 34 and 35 (65) rotated in the horizontal direction in conjunction with the avoidance movement of each of the first and second rear seats 5a and 5b, the second links 37 (66) rotated in a vertical direction in conjunction with the horizontal rotation of the first links 34 and 35 (65), wherein the forward and rearward movement of the first and second rear seats 5a and 5b is restricted/derestricted by an end portion of the second links 37 (66) engaging/disengaging with/from the restricting protrusions 31 (61).

Accordingly, the first links 34 and 35 (65) and the second links 37 (66) are structured so as to interlock with the avoidance movement of each of the first and second rear seats 5a and 5b. When each of the first and second rear seats 5a and 5b is in the state where each of the rear seats 5a and 5b contacts the corresponding rear wheel housing 1a, the second links 37 (66) engage with the corresponding restricting protrusions 31 (61). On the other hand, when each of the first and second rear seats 5a and 5b is in the state where each of the rear seats 5a and 5b does not contact the corresponding rear wheel housing 1a, the second links 37 (65) do not engage with the corresponding restricting protrusions 31 (61). Hence, by employing the mechanical movement restricting mechanism 30 (60), the rearward movement of each of the first and second rear seats 5a and 5b is surely restricted/allowed.

Accordingly, when each of the first and second rear seats 5a and 5b is further rearwardly moved in the state where each of the rear seats 5a and 5b contacts the corresponding rear wheel housing 1a, the rearward movement of each of the rear seats 5a and 5b is restricted by means of the movement restricting mechanism 30 (60) before each of the rear seats 5a and 5b contacts the corresponding rear wheel housing 1a. Therefore, the damage caused on each of the first and second rear seats 5a and 5b by contacting the corresponding rear wheel housing 1a is surely prevented. Further, when each of the first and second rear seats 5a and 5b is moved so as to avoid the contact with the corresponding rear wheel housing 1a, the rearward movement of each of the rear seats 5a and 5b restricted by the movement restricting mechanism 30 (60) is derestricted in response to the avoidance movement of each of the first and second rear seats 5a and 5b. Hence, the amount of the movement of each of the first and second rear seats 5a and 5b is sufficiently ensured, and further, the various seat arrangements having the high usability is achievable. Moreover, each of the first and second rear seats 5a and 5b is surely prevented from contacting the corresponding rear wheel housing 1 a.

According to the first and the second embodiments, the movement restricting mechanism 30 (60) includes the restricting protrusions 31 (61) provided on each of the first and second slide rails 7 (8), the interlocking mechanism 32 (62) provided at each of the first and second rear seats 5a and 5b for restricting the rearward movement of each of the first and second rear seats 5a and 5b at the position anterior to the position where each of the first and second rear seats 5a and 5b contacts each of the rear wheel housings 1a by the interlocking mechanism engaging with the restricting protrusions 31 (61) and disengaging from the restricting protrusions 31 (61) in conjunction with the avoidance movement, the interlocking mechanism 32 (62) includes the first links 34 and 35 (65) rotated in the horizontal direction in conjunction with the avoidance movement of each of the first and second rear seats 5a and 5b, the second links 37 (66) rotated in a vertical direction in conjunction with the horizontal rotation of the first links 34 and 35 (65), wherein the forward and rearward movement of the first and second rear seats 5a and 5b is restricted/derestricted by the end portions of the second links 37 (66) engaging/disengaging with/from the corresponding restricting protrusions 31 (61).

Accordingly, the first links 34 and 35 (65) and the second links 37 (66) are structured so as to interlock with the avoidance movement of each of the first and second rear seats 5a and 5b. When each of the first and second rear seats 5a and 5b is in the state where each of the rear seats 5a and 5b contacts the corresponding rear wheel housing 1a, the second links 37 (66) engage with the corresponding restricting protrusions 31 (61). On the other hand, when each of the first and second rear seats 5a and 5b is in the state where each of the rear seats 5a and 5b does not contact the corresponding rear wheel housing 1a, the second links 37 (66) do not engage with the corresponding restricting protrusions 31 (61). Hence, by employing the mechanical movement restricting mechanism 30 (60), the rearward movement of each of the first and second rear seats 5a and 5b is surely restricted/allowed.
A seat system for a vehicle, includes a first pair of slide rails (7) and a second pair of slide rails (8) arranged on a vehicle compartment floor (3) so as to extend in a front-rear direction of the vehicle, a first seat (5a) and a second seat (5b) arranged alongside each other, a forward-rearward movement mechanism (10) provided under each of the first and second seats (5a, 5b) and supported at each of the first and second pairs of slide rails (7, 8) so that each of the first and second seats (5a, 5b) is movable along each of the first and second pairs of slide rails (7, 8), and a sway mechanism (20) provided between each of the first and second seats (5a, 5b) and the forward-rearward movement mechanism (10) and swayably supporting each of the first and second seats (5a, 5b) at least in a direction where each of the first and second seats (5a, 5b) is approaching another of the first and the second seats (5a,5b).

## Claims

1. A seat system for a vehicle, comprising:
a first pair of slide rails (7) and a second pair of slide rails (8) adapted to be arranged on a compartment floor (3) of the vehicle (1) so as to extend in a front-rear direction of the vehicle;
a first seat (5a) and a second seat (5b) arranged alongside each other in a vehicle width direction;
a forward-rearward movement mechanism (10) provided under each of the first and second seats (5a, 5b) and supported at each of the first and second pairs of slide rails (7, 8) so that each of the first and second seats (5a, 5b) is movable in the front-rear direction of the vehicle along each of the first and second pairs of slide rails (7, 8); and
a sway mechanism (20) provided between each of the first and second seats (5a, 5b) and the forward-rearward movement mechanism (10) and swayably supporting each of the first and second seats (5a, 5b) about a preset rotation center point (Oa, Ob) at least in a direction where each of the first and second seats (5a, 5b) is approaching another of the first and the second seats (5a, 5b).

2. The seat system for the vehicle according to Claim 1, wherein each of the first pair of slide rails (7) and the second pair of slide rails (8) is arranged to be orthogonal to the vehicle width direction.

3. The seat system for the vehicle according to Clam 1, wherein each of the first pair of slide rails (7) and the second pair of slide rails (8) is arranged so as to obliquely intersect with the vehicle width direction.

4. The seat system for the vehicle according to Claim 1, wherein the rotation center point (Oa, Ob / Oc, Od) of each of the first and second seats (5a, 5b) is set at a forward position and a rearward position in the front-rear direction of the vehicle.

5. The seat system for the vehicle according to Claim 1 or Claim 4, wherein the sway mechanism (20) includes a plurality of first sway rails (21) fixed at the forward-rearward movement mechanism (10) and forming a part of concentric arcs centered on the rotation center point (Oa, Ob / Oc, Od), a plurality of second sway rails (23) fixed at a bottom portion of each of the first and second seats (5a, 5b) and swayably supporting each of the first and second seats (5a, 5b) along the plurality of first sway rails (21), and a plurality of connecting portions (22a, 22b) supported between the plurality of the first sway rails (21) and the plurality of the second sway rails (23).

6. A seat system for a vehicle, comprising;
a first slide rail structure (7) and a second slide rail structure (8) adapted to be arranged on a compartment floor of the vehicle so that front ends of the first and second slide rail structures (7, 8) in a front-rear direction of the vehicle outwardly spread in the vehicle width direction and rear ends thereof converge on a vehicle center line in the front-rear direction of the vehicle;
a first seat (5a) and a second seat (5b) arranged alongside each other in a vehicle width direction;
a forward-rearward movement mechanism (10) provided below each of the first and second seats (5a, 5b) and supported at each of the first and second slide rail structures (7, 8) so that each of the first and second seats (5a, 5b) is movable along each of the first and second slide rail structures (7, 8); and
a rotation retaining mechanism (40) provided between each of the first and second rear seats (5a, 5b) and the forward-rearward movement mechanism (10), the rotation retaining mechanism (40) rotatably supporting each of the first and second seats (5a, 5b) and retaining each of the first and second seats (5a, 5b) at a position where each of the first and second seats (5a, 5b) faces the same direction as a extending direction of each of the first and second rail structure (7, 8).

7. The seat system for the vehicle according to Claim 6, wherein the seat rotation retaining mechanism (40) retains each of the first and second seats (5a, 5b) at a position where each of the first and second seats (5a, 5b) faces inward of a vehicle compartment.

8. The seat system for the vehicle according to Claim 6 or Claim 7, wherein the seat rotation retaining mechanism (40) retains each of the first and second seats (5a, 5b) so as to face at least towards a vehicle entrance when each of the first and second seats (5a, 5b) is moved to a position corresponding to the vehicle entrance.

9. The seat system for the vehicle according to any one of Claims 1 to 8 further comprising a movement restricting mechanism (30/60) restricting rearward movement of each of the first and second seats (5a, 5b) at a position anterior to a position where each of the first and second seats (5a, 5b) contacts each of rear wheel housings (1a) protruding towards a vehicle compartment when each of the first and second seat (5a, 5b) is moved backward in a state where each of the first and second seat (5a, 5b) contacts each of the rear wheel housings (1a), wherein the movement restricting mechanism derestricts the rearward movement of each of the first and second seats (5a, 5b) in conjunction with an avoidance movement when each of the first and second seats (5a, 5b) is moved to a state where each of the first and second seats (5a, 5b) does not contact each of the rear wheel housings (1a).

10. The seat system for the vehicle according to Claim 9, wherein the movement restricting mechanism (30/60) includes a restricting protrusion (31/61) provided on each of the first and second slide rails (7, 8), an interlocking mechanism (32/62) provided at each of the first and second seats (5a, 5b) for restricting a rearward movement of each of the first and second seats (5a, 5b) at a position anterior to a position where each of the first and second seats (5a, 5b) contacts each of the rear wheel housings (1a) by the interlocking mechanism engaging with the restricting protrusion (31/61) and disengaging from the restricting protrusion (31/61) in conjunction with the avoidance movement, the interlocking mechanism (32/62) includes a first link (34, 35/65) rotated in a horizontal direction in conjunction with the avoidance movement of each of the first and second seats (5a, 5b), a second link (37/66) rotated in a vertical direction in conjunction with the horizontal rotation of the first link (34, 35/65), wherein the forward and rearward movement of the first and second seats (5a, 5b) is restricted/derestricted by an end portion of the second link (37/66) engaging/disengaging with/from the restricting protrusion (31/61).

11. A seat system for a vehicle, comprising:
a first pair of slide rails (7) and a second pair of slide rails (8) adapted to be arranged on a compartment floor (3) of the vehicle (1) so as to extend in a front-rear direction of the vehicle;
a first seat (5a) and a second seat (5b) arranged alongside each other in a vehicle width direction;
a forward-rearward movement mechanism (10) provided under each of the first and second seats (5a, 5b) and supported at each of the first and second pairs of slide rails (7, 8) so that each of the first and second seats (5a, 5b) is movable in the front-rear direction along each of the first and second pairs of slide rails (7, 8);
a contact avoiding mechanism (20/40) provided between each of the first and second seats (5a, 5b) and the forward-rearward movement mechanism (10) and movably supporting each of the first and second seats (5a, 5b) in a direction where each of the first and second seats (5a, 5b) approach each other so that each of the first and second seats (5a, 5b) does not contact each of rear wheel housings (1a) protruding towards a vehicle compartment when each of first and second seats (5a, 5b) is rearwardly moved; and
a movement restricting mechanism (30/60) for restricting a rearward movement of each of the first and second seat (5a, 5b) at a position anterior to a position where each of the first and second seats (5a, 5b) contacts each of the rear wheel housings (1a) when each of the first and second seat (5a, 5b) is moved backward in a state where each of the first and second seat (5a, 5b) contacts each of the rear wheel housings (1a), wherein the movement restricting mechanism (30/60) derestricts the rearward movement of each of the first and second seats (5a, 5b) in conjunction with an avoidance movement when each of the first and second seats (5a, 5b) is moved to a state where each of the first and second seats (5a, 5b) does not contact each of the rear wheel housings (1a).

12. The seat system for the vehicle according to Claim 11, wherein the movement restricting mechanism (30/60) includes a restricting protrusion (31/61) provided on each of the first and second slide rails (7, 8), an interlocking mechanism (32/62) provided at each of the first and second seats (5a, 5b) for restricting a rearward movement of each of the first and second seats (5a, 5b) at a position anterior to a position where each of the first and second seats (5a, 5b) contacts each of the rear wheel housings (1a) by the interlocking mechanism engaging with the restricting protrusion (31/61) and disengaging from the restricting protrusion (31/61) in conjunction with the avoidance movement, the interlocking mechanism (32/62) includes a first link (34, 35/65) rotated in a horizontal direction in conjunction with the avoidance movement of each of the first and second seats (5a, 5b), a second link (37/66) rotated in a vertical direction in conjunction with the horizontal rotation of the first link (34, 35/65), wherein the forward and rearward movement of the first and second seats (5a, 5b) is restricted/derestricted by an end portion of the second link (37/66) engaging/disengaging with/from the restricting protrusion (31/61).
